# EUROPEAN PATENT APPLICATION

(11) **EP 2 908 546 A1**
(43) Date of publication of application: **19.08.2015**
(21) Application number: 14305188.6
(22) Date of filing: 13.02.2014
(51) Int. Cl.: H04N 21/488, G06F 17/30

(54) **Method for enriching a description of an audiovisual document and corresponding device and terminal**

(71) Applicant: Thomson Licensing, 92130 Issy-les-Moulineaux (FR)
(72) Inventor: Lanagan, James, 35 576 Cesson Sévigné (FR); Guegan, Marie, 35 576 Cesson Sévigné (FR); Schmouker, Philippe, 35 576 Cesson Sévigné (FR); Lambert, Anne, 35 576 Cesson Sévigné (FR)
(74) Representative: Browaeys, Jean-Philippe

(57) **Abstract**

Method for enriching a description related to an audiovisual document intended to be viewed by a user, with a multimedia content created by a creator, which comprises:
- calculating a social score for the creator and/or user;
- determining a role for the creator and/or user;
- semantically analyzing at least one of said multimedia contents;
- obtaining an enriched description, associated to at least an enriching multimedia content;
- for at least a user of said users, selecting at least an enriching multimedia content, to be rendered to said user, according to pre-determined rules taking into account said user's profile and/or role, at least one of said semantic content descriptor and/or the profile and/or the role of the creator of said enriching multimedia content.

## Description

### TECHNICAL FIELD

The field of the invention generally relates to restitution of audiovisual documents, for instance over a network (such as Internet), and more specifically to techniques for enriching such audiovisual documents to be restituted with metadata (such as written commentaries, picture, etc.).

### BACKGROUND ART

Annotation of dynamic multimedia contents, such as Audio/Video contents, with additional information (so called metadata) is increasingly becoming a main issue to cope with, due to the massive amount of available data. Those metadata can be associated with the Audio/Video contents by the publisher of the audiovisual (or AV) content, but increasingly also may come from other sources, and notably user sources such as social networks and web forums.

When the multimedia content is an audiovisual document, which is to be restituted during a limited time interval thus limiting the number of metadata that may be accessed, the choice of metadata to be presented during the rendering of the audiovisual document becomes more critical.

Different techniques for simultaneous presentation of an audiovisual document and metadata can be used.

Some prior art solutions sometimes present a piece of metadata during all the rendering of the audiovisual document, or periodically (for example by a looping rendering). In case of a broadcasting of real time event, either in real time or in replays, some of the prior art solutions for enriching the audiovisual document with watcher's comments make use of the publication date of those comments.

Other prior art techniques aim to select the most interesting additional information to an audiovisual document, such pieces of information being retrieved, for instance, from social networks over the Web, such as Web forum or dedicated websites, on a volume basis, for example by selecting the most popular comments related to an audiovisual document among a community of web users.

Notably, known techniques exist for selecting, for a given audiovisual document published online, the related metadata approved by a large majority of web users thanks to, for instance, "plus one" or "like" actions. However, such an identification of popular metadata is time-consuming and requires interactions of many web users and, as a consequence, may not be immediately available for a new generated metadata.

Thus, it remains a significant need for selecting the most interesting metadata in order to enrich a given multimedia document.

### SUMMARY

The aim of the invention is thus that of remedying at least some of the previously mentioned drawbacks and, for instance, improving the retrieval of relevant additional information during the diffusion of a given audiovisual document.

Thus, according to at least one embodiment, a new way of enriching a time-stamped description of an audiovisual document is provided.

The aforementioned problem can be solved, according to one aspect of the disclosure, by a method for enriching at least a description related to an audiovisual document intended to be viewed by at least a user, with at least a multimedia content created by at least a creator, each creator and each user being assigned a profile consisting of a set of characteristics.

According to the invention, said method comprises:
- calculating at least a social score for each creator and/or user;
- determining a role for at least a creator and/or user, a role being selected, among a plurality of predefined roles, according to at least one first pre-determined rule taking into account the profile and/or social score of said creator and/or user;
- semantically analyzing at least one of said multimedia contents for identifying at least a semantic content descriptor to be associated to said at least one multimedia content;
- obtaining an enriched description, said description being enriched with at least one of said multimedia contents, called an enriching multimedia content, according to at least a semantic content descriptor of said multimedia content;
- for at least one of said users, selecting at least a part of at least an enriching multimedia content, to be rendered to said user, according to at least one second pre-determined rule taking into account said user's profile and/or role, at least one of said semantic content descriptors of said enriching multimedia content and/or the profile and/or the role of at least one creator of said enriching multimedia content.

An audiovisual document denotes any document that comprises an audio or video content. It should be understood that an audiovisual document might be as diverse as a movie, a video clip, a memorized event report (for example a sport match video report), or be an audio recording for example (music, interview,...).

A description relates to this audiovisual document. This description may be for instance a time-stamped description, for example a simple chronological sampling of the audiovisual document, according to a time reference or any kind of chronologically-structured text description of the document content. It may include textual elements, or document feature, related to the audiovisual document, such as comments related to a specific scene, event or action, a particular aspect of the movie (named entity, actor, director, light, etc.) or a particular aspect in a specific scene.

For example, it may be also a script, in the traditional sense of movie scripts for example, where time-stamps indicating the beginning of each scene have been inserted.

According to a preferred embodiment, the description is to be associated with some multimedia contents. A multimedia content may be for example a comment, an URL, a picture, a video, or a combination thereof. As an example, such a multimedia content may comprise a textual content, for example a review, comment, blog or forum post. This multimedia content is created by a person or entity, called a creator. This creator belongs to at least an online community of members.

Thus, the present invention proposes a new way of automatically enriching a description of an audiovisual document (for example a movie, a TV series or a TV show) thanks to multimedia contents, said enrichment (for example called metadata) being personalized for a particular end-user or a particular group of end-users.

Indeed, the use of crowd-sourced intelligently parsed and linked metadata may help to enrich the description of an audiovisual document. However, use of all crowd-sourced metadata may be overwhelming. The present invention, by the extraction of the most relevant/insightful metadata, provides a richer content consumption experience to an end-user. Furthermore, synchronization of the audiovisual document with the multimedia contents means that relevant additional information may be provided to end-users when it is most useful. This also creates the potential for personalized content consumption experiences based on newly available browsing criteria (e.g. based on contents from some end-user's interest, or based on particular contents posted by a creator who is of interest to the end-user).

The present invention proposes the filtering of the multimedia contents enriching the description, in order to limit the number of presented multimedia contents, to the ones that are most relevant for a particular end-user or group of end-users. The evaluation of relevance is assessed according to a set of predefined rules. Those rules of relevance may notably take account of at least some of the semantic content descriptor of the multimedia contents enriching the description, which may be compared for example to some characteristics of an end-user's profile.

A user or creator's profile is a set of characteristic, that may include for example, for a creator, his number of posts or a propensity to reply to others, or a social score of the user or creator within the social network, or a particular aspect like his name, pseudo name, sex, or avatar.

The relevance of a multimedia content may also be evaluated based at least partially on its creator's role in at least one online community. A role is a set of attributes and behaviors expected from a member of a community. It is evaluated thanks to a set of predefined rules notably taking into account a social score of a member. Indeed, a multimedia content presented by a creator considered as being very influent in the community may be assumed to be more relevant than a multimedia content presented by a recently registered creator with few multimedia contents broadcasted inside the community. Such a social score may be assessed thanks to a social graph.

Depending on the embodiments, all the steps of the method may be performed for each user intending to view an audiovisual document, an enriched description of the audiovisual document being obtained for each such user.

In some other embodiments, an enriched description may be obtained for several users (for example periodically, if the users have subscribed to a particular TV series), and a selecting step being performed for each user, in order to personalize the description to each user.

In others embodiments, a unique selection step may be performed for a group of users. Such an embodiment may permit to a particular group of users to share a personalized description with, for example, all multimedia contents being relevant to all users of the group or to at least one user of the group being selected.

According to a preferred embodiment, each creator and/or user belongs to an online community of members and said calculating at least a social score for said creator and/or user comprises:
- defining a social graph representing the previous interactions and/or relationships between said members inside said online community, each node of said graph relating to a member:
- assigning to each node of said graph a social score, calculated according to its position in said social graph and/or to its connections with other nodes.

All interactions and relationships between members of a community may be represented under the form of a graph, or social network of members. Each member in the social network may be assigned a social score in this social network.

According to a preferred embodiment, a connection between two nodes is based on the involvement of the members represented by said nodes in at least a multimedia content created by a member of said community.

According to a preferred embodiment, a social score of a node is based on at least one of:
- a position of said node in the graph, central nodes of said graph being assigned a higher social score than peripheral nodes;
- a number of connections established with said node;
- said node closeness centrality;
- said node betweeness centrality;
- a level of respect associated with a member related to said node.

According to a preferred embodiment, semantically analyzing comprises:
- delivering a decision of identification of at least a semantically significant item, and
- when said decision is positive, associating at least a semantic content descriptor, deduced from said semantically significant item, to at least a part of said at least one multimedia content.

Thus, in such embodiments, the method permits to identify semantic items in the multimedia content that only have a semantic meaning in the context of the audio visual document (because of a reference to a character in the audiovisual document for example, or because of a text comprising an extract of a speech of one character for example). Such identification may be performed thanks to at least a document feature associated to the time-stamped description notably.

According to a preferred embodiment, said description is a time-stamped description, comprising at least a time-stamp representative of a temporal position in said audiovisual document, and wherein obtaining an enriched description comprises:
- timely aligning at least a part of a least one of said multimedia contents with at least one time-stamp of said time-stamped description, said alignment being based on a criterion of similarity between at least a content descriptor previously associated to said multimedia content and a portion of said time-stamped description,
- associating said time-stamp with at least a part of a timely-aligned multimedia content.

In some embodiments, the present invention proposes to synchronize the audiovisual document with some related multimedia contents, the time alignment being based on a semantic criterion rather than on a popularity criterion inside said creators community, or on a criterion linked to a dating of the generation of the multimedia contents, like some solutions of the prior art. This alignment acts as a semantic filtering of the multimedia contents. For example, at a particular time-stamp of the audiovisual document, only the multimedia contents semantically relevant to that time-stamp will be proposed to an end-user.

Furthermore, it is possible for a multimedia content that is relevant with several portions of an audiovisual document to be associated with several time-stamps.

In some embodiments, a multimedia content (like a biography of a film maker) that is relevant in general with the audiovisual document but not to a special moment of the film can be attributed a special time-stamp of the audiovisual document, like the first or the last one, or a time-stamp which isn't yet associated with any multimedia content.

The criterion of similarity between the time-stamped description and at least a semantic content descriptor of a multimedia content may be based only on the time-stamps of the description. It may be the case for example because the multimedia content contains an explicit reference to a particular time-stamp (like "Don't miss A. Hitchcock's appearance at minute 8.30 of the movie "The Birds"). The criterion of similarity may be based also on the similarity between at least a semantic content descriptor of a multimedia content and a semantic element contained in the time-stamped description. Such a semantic element may for example comprise an indication of a theme/topic of a scene, during a time interval (like "4.3.8 Hitchcok's first appearance").

According to a preferred embodiment, semantically analyzing at least one of said multimedia contents is performed before timely aligning and takes into account at least a document related feature contained in said time-stamped description.

According to a preferred embodiment, said method further comprises, during a rendering of said audiovisual document according to said enriched description, a simultaneous rendering of said selected at least one part of said enriching multimedia content at said at least one time-stamp.

Due to the limited time of availability of multimedia contents (because of the dynamic aspect of the audiovisual document), by limiting the number of multimedia contents to be rendered at a moment, the invention maximizes the probability for a particular user to make use of a relevant multimedia content.

Depending on the embodiments, the rendering of the selected enriching multimedia content may be performed on the same device as the audiovisual document or on a distinct one.

According to a preferred embodiment, said method further comprises enriching at least a creator's profile, with at least a predefined feature deduced from his own multimedia contents.

Such a predefined feature may be deduced through natural language processing techniques.

For example, when some multimedia content contains a written comment, the words used by a creator can be analyzed as positive or negative terms, and so, a sentiment analysis of the creator's multimedia content can be performed, in order to identify some predefined feature related to the creator's characteristic (e.g. optimist, pessimist, anxious, ...).

A predefined feature may also be based on at least a semantic content descriptor associated with a multimedia content, or be based on at least a statistical indicator resulting from a statistical analysis of the creator's multimedia content.

For example, such a statistic indicator may belong to a group comprising:
- a number of multimedia contents created by the creator during at least a reference time interval;
- an average number of accesses to the creator's multimedia contents by some other members of said community during at least a reference time interval;
- an average number of replies to the creator's multimedia contents during at least a reference time interval;
- a maximum number of replies to one of the creator's multimedia contents during at least a reference time interval;
- an average time for replying to one of the creator's multimedia contents during at least a reference time interval;
- a frequency of creation of multimedia contents, by the creator, during at least a reference time interval;
- a percentage of the creator's multimedia contents that have prompted a reply from a creator inside said community during at least a reference time interval;
- a propensity to react to other creator's multimedia contents;

According to a preferred embodiment, at least one of enriching, calculating, determining, semantically analyzing, obtaining, and selecting is performed periodically.

According to a preferred embodiment, at least two of enriching, calculating, determining, semantically analyzing, obtaining, and selecting are performed simultaneously.

According to a preferred embodiment, selecting is triggered by a manual action of the user.

The disclosure further relates to a device for enriching at least a description related to an audiovisual document intended to be viewed by at least a user, with at least a multimedia content created by at least a creator, each creator and each user being assigned a profile consisting of a set of characteristics.

According to the invention, said device comprises the following modules:
- a calculating module configured to calculate at least a social score for each creator and/or user;
- a determining module configured to determine a role for at least a creator and/or user, a role being selected, among a plurality of predefined roles, according to at least one first pre-determined rule taking into account the profile and/or social score of said creator and/or user;
- a semantically analyzing module configured to semantically analyze at least one of said multimedia contents for identifying at least a semantic content descriptor to be associated to said at least one multimedia content;
- an obtaining module configured to obtain an enriched description, said description being enriched with at least one of said multimedia contents, called an enriching multimedia content, according to at least a semantic content descriptor of said multimedia content;
- a selecting module configured to select, for at least one of said users, at least a part of at least an enriching multimedia content, according to at least one second pre-determined rule taking into account said user's profile and/or role, at least one of said semantic content descriptor of said enriching multimedia content and/or the profile and/or the role of at least one creator of said enriching multimedia content.

The disclosure further relates to a terminal for personalizing a description of an audiovisual document intended to be viewed by a user of said terminal, said user being assigned a profile consisting of a set of characteristics.

According to the invention, said terminal comprises the following modules:
- a reception module configured to receive an enriched description, said description being enriched with at least a multimedia content associated with at least a semantic content descriptor;
- a selecting module configured to select at least a part of said multimedia content to be rendered to said user of said terminal, according to at least one pre-determined rule taking into account said user's profile and taking into account at least one of said semantic content descriptors.

The disclosure further relates to a computer program product downloadable from a communication network and/or recorded on a medium readable by computer and/or executable by a processor, comprising program code instructions for implementing said method for enriching at least a description related to an audiovisual document.

The disclosure further relates to a non-transitory computer-readable medium comprising a computer program product recorded thereon and capable of being run by a processor, including program code instructions for implementing said method for enriching at least a description related to an audiovisual document.

Although examples of the invention have been described hereinabove in relation with a limited number of embodiments, those skilled in the art, when reading this description, will understand that other embodiments can be imagined without departing from the scope of this invention.

In particular, while not explicitly described, the present embodiments may be employed in any combination or sub-combination.

### BRIEF DESCRIPTION OF DRAWINGS

Other characteristics and advantages of embodiments of the invention shall appear when reading the following description, provided by way of a non-restricted and indicative example (all of the embodiments of the invention are not limited to the characteristics and advantages of the embodiments described hereinafter), and the annexed drawings, wherein:
- Figure 1 shows the main steps of the method according to a preferred embodiment of the present invention;
- Figure 2 and 3 are block diagrams of an example of devices adapted for implementing the method described in Figure 1.

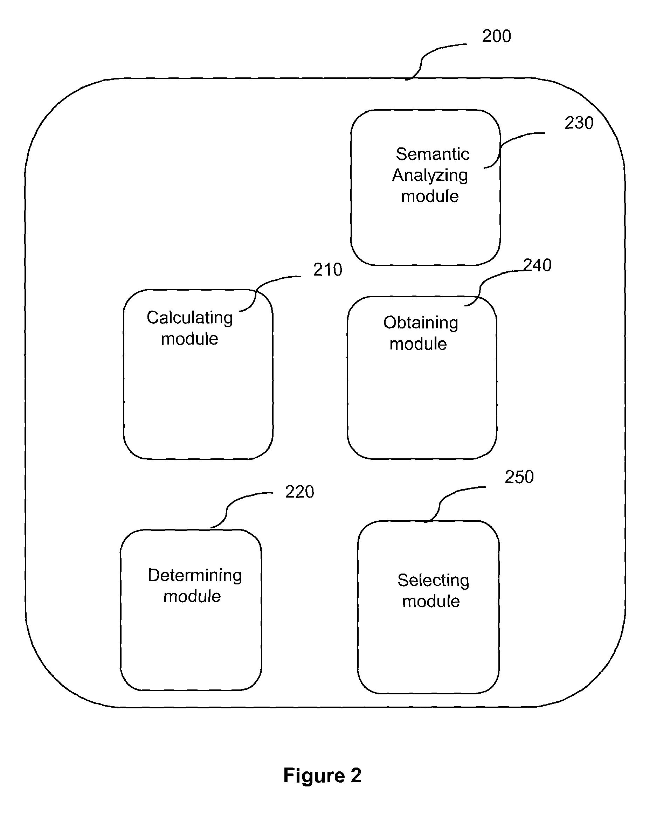

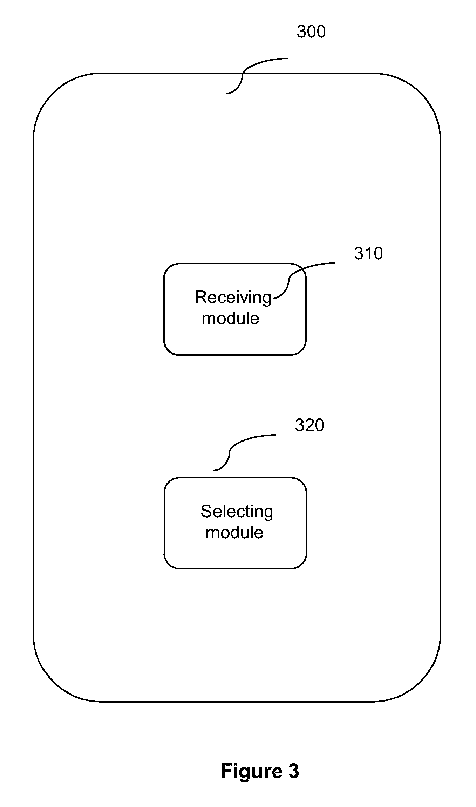

In Figures 2 and 3, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION OF EMBODIMENTS

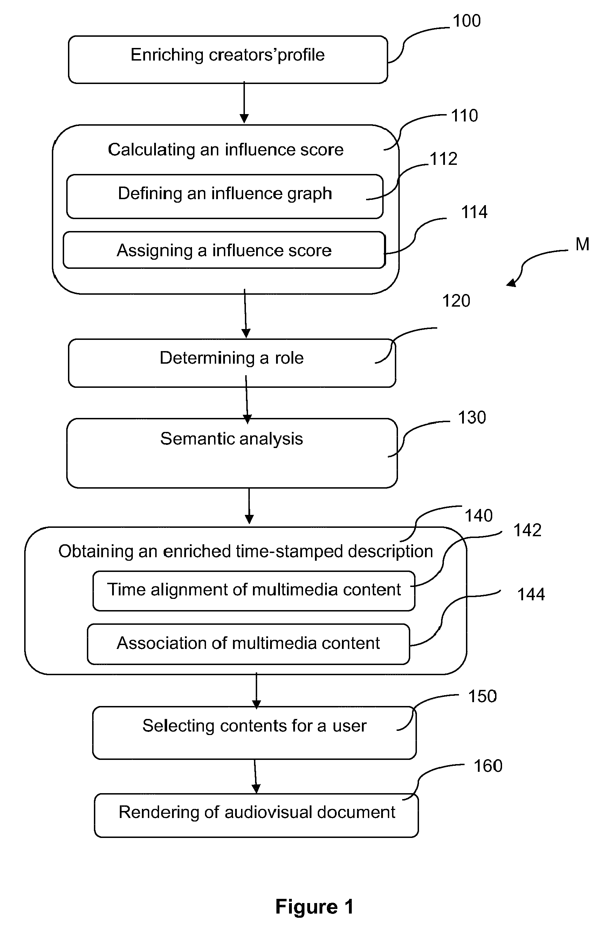

According to a preferred embodiment of the present invention, as shown on Figure 1, it is proposed a new and inventive method M for enriching, and personalizing, a description related to an audiovisual document (that is to say a document that comprises an audio and/or video content), intended to be viewed by at least a particular user.

In the embodiment illustrated by figure 1, the audiovisual document is associated with at least a description that includes document features such as short scene textual comments and time-stamps, related to the beginning and/or to the end of the short scenes, and/or a time length of the short scenes.

According to a preferred embodiment of the present invention, a description of an audiovisual document is enriched with multimedia contents, called "enriching multimedia contents". For example, the description is a time-stamped description and these multimedia contents are timely aligned with the time-stamps of the description of the audiovisual document.

A multimedia content may be for example a comment, an URL, a picture, a video, or a combination thereof.

As an example, such a multimedia content may comprise a textual content, like a forum post, and may be aligned according to the semantics of both a textual portion of the description and the multimedia contents themselves.

According to the preferred embodiment of the present invention, a filtering of the enriching multimedia contents is performed prior to the rendering of the audiovisual document to a particular user. This filtering may notably take account of the user's profile and/or role, the profile and/or role of the creators of the enriching multimedia contents and/or the semantic content descriptors of the enriching multimedia contents.

For example, the selected multimedia contents may be chosen in order to match closest interests of a user or to select only the multimedia contents created by creators that are influent (or socially important) inside an online community of members.

Figure 1 illustrates the main steps of the method M for enriching a considered description related to an audiovisual document.

In the illustrated embodiment, a Web site dedicated to audiovisual documents (e.g. an online database like IMDb) gives access to information related to those audiovisual documents. Such information may include the audiovisual documents themselves (for example by replay or streaming or transfer of the document), time-stamped descriptions, or synopsis, related to those documents, and multimedia contents, such as comments, picture and/or video posted by creators registered in an online database of the Web site. The registered individuals of the Web site form an online community of members. Some of those members (or "creators") have already created contents inside the Web site. In the exemplary embodiment described, the user is a member of the community of members (either a creator of multimedia content, either not yet a creator). In some other embodiments, the user may be an individual visiting the web site, and not registered as a member but being assigned (either manually, either automatically) a predefined profile.

In the exemplary embodiment described below, in relation with Figure 1, the audiovisual document is a particular movie, which is to be played to a particular user. This movie is described by a traditional script that has been time-stamped beforehand.

Each member of the community is described in the online database by his profile, comprising a set of characteristics including for example personal piece of information (such as name, age, sex, avatar, birth date or registering date), characteristics defined by the member himself (like a favorite style of movies or some favorite actors, or an expertise level in the domain of movies), and characteristics automatically added to his profile. Such characteristics may be based on statistic piece of information about the member's activity in the community (for example a number of multimedia contents posted by the member or the number of movies he has commented), and/or may include features that are automatically attributed according to his own created multimedia contents, notably features deduced from those multimedia contents, as described below.

In the particular embodiment of Figure 1, the method M comprises a step of enriching 100 at least a creator's profile, with at least one predefined feature deduced from his own created multimedia contents. This step is optional.

Such a feature may be obtained thanks to Natural Language Processing techniques, such as information extraction, named entity recognition, or feature-based sentiment analysis (for example an opinion mining algorithm).

A feature may be obtained, for example, by a direct mapping with at least a term extracted from at least one multimedia content created by the creator (thanks to information extraction techniques for example) or a feature may be defined using predefined rules taking account of some predefined terms extracted from at least one multimedia content created by the creator, and/or some descriptors of at least a multimedia content created by the creator.

For example the occurrence of a combination of several extracted terms may be used to define some interest of a creator (for example an existing combination of terms related to violence or fights, and terms related to enthusiasm in a created multimedia content may be used to add "action movie" to the creator's favorite type of movie). Similarly, sentiment analysis may also be performed, in order to choose feature defining the creator's personality. A member's profile may notably include numerical values. In such an embodiment, the method may further include, for example, an additional step of evaluating (not shown in Figure 1), for each member, at least a member's score, to be added to his profile. This member's score may be based, at least partially, on at least one other characteristic included in his profile.

As an illustrative example, such a score may be an expertise level. It may be defined for example based on the number of multimedia contents he has created, according to threshold values (like a mean number of multimedia contents created by a member of the community).

A member score S_{c}, describing a member expertise, may also be calculated as a linear or polynomial combination of some numerical characteristics of the member's profile, with weighting numbers.

For instance, for a member Mᵣ, a member's score may be : Sₘ = ax^{p}+by^{q}+cz^{r}+k with:
- x: number of multimedia contents posted by Mᵣ since Mᵣ's registering date;
- y: elapsed time since Mᵣ's registering date;
- z: age of Mᵣ;
- k: any constant real value, may be set to 0.0;
- a, b, c: real numbers used to weight each characteristic x, y, z (for instance, a = b = 1.0 and c = 2.0);
- and p, q and r the exponents of the polynomial variables x, y and z. These exponents may be real values and may each be set to 1.0.

In some embodiments, several elementary members scores may be defined for the same member, each addressing a special aspect of the member's profile.

In the particular embodiment illustrated by Figure 1, the method M also comprises a step 110 of calculating a social score for a member. In particular, the calculating step 110 comprises a step of defining 112 a social graph, or social network, representing the previous interactions and/or relationships between said members in the community, wherein each node represents a member (for example by memorizing an identifier of the member).

This calculating step 110 may for example make use of the reply-to structure over the whole website in order to characterize all the members among the community according to their own behavior or its evolution over time.

Depending on the embodiments, the defining step 112 may be performed thanks to already known techniques in social network analysis, such as the one proposed by Wasserman & Faust (1994), or the one described by Lanagan and al. (2013). For example, clustering techniques, resulting in the grouping of members having common frequent interactions may be adopted.

In the illustrated embodiment, two nodes are connected if there exists a broadcasted multimedia content that involves both members represented by both nodes. For example, a connection between two nodes may signify that the members represented by both nodes have broadcasted, or uploaded, a multimedia content within a same thread of exchanged multimedia contents (for example a thread of posts), or the occurrence of a direct reply from one member to another, or the joint citation of both members in the same multimedia content or by a third member, or the belonging of both members to the same thematic forum, etc....

This calculating step 110 may further include additional steps (not shown by Figure 1) of identifying the neighbors of a node, according to the social graph. A neighbor of a particular node may be defined, for example, as a node having a direct connection with this particular node.

The identifiers of the members representing the neighbor nodes of a node may also be added to the profile of the member represented by this node.

In the particular embodiment illustrated by Figure 1, the calculating step 110 may also comprise a step 114 of assigning, to each node of said social graph, and as a consequence to each related member's identifier, a social score, calculated according to the node position in said social graph and/or to the existing connections and/or the number of connections established with the node.

For example, in some embodiments, central nodes of said graph are assigned a higher social score than peripheral nodes. In some other embodiments, the social score of a node is evaluated simply by the number of connections established with this node. In other embodiments, eventually complementary, the social score of a node may be at least partially based on its closeness (i.e. the mean number of connections between the node and others nodes) and/or its "betweeness" centrality (i.e. the percentage of number of closest links between two nodes that comprises a connection to this node) in the graph. As an illustrative example, the social score of a node may be inversely proportional to the mean number of connections between the node and the others nodes or be based on a comparison between the percentage of closest links between two nodes that comprise a connection to this node, and predefined thresholds.

In some embodiments, the social score may further take account of the result of a semantic or statistical analysis of multimedia contents exchanged with the member represented by the node, delivering for example a level of respect associated to the member represented by the node.

Such a level of respect may be evaluated according to threshold values related to percentages of multimedia contents created by the member represented by the node, that have been replied to or forwarded by other members. The evaluation of such a level of respect may also take account of the exchanged multimedia contents themselves, for example by assessing a number of respectful terms, or at the opposite of imperative terms, included in some comments comprised in a multimedia content created or intended for a member represented by a node.

In the particular embodiment illustrated by Figure 1, the method M also comprises a step 120 of determining a role for each member of the community. In other embodiments, said determining step 120 may be performed only on a subset of members of the community, for example the newly registered members or a subset of members belonging to the same cluster as a user, or a subset of neighbors of a user, or the members newly becoming creators of contents inside the community, or a subset of members being chosen on a periodic basis. In some embodiments, the determining step 120 may be conducted only for creators whose multimedia contents are related to the particular audiovisual document.

This determining step 120 may notably use the profile and/or the social score of at least a member.

For example, in the illustrated embodiment, the members may be partitioned according to several pre-defined roles: "listener", "troll", "expert", "novice", "spammer", and "average creator".

A newly registered member may be assigned a role of "listener", until he creates a multimedia content, thus becoming a "novice" for example.

A creator may also be determined as playing a role of a "novice":
- if the number of his own created multimedia content is below a certain threshold and/or
- if the percentage of some punctuation marks, like "?", or the percentage of terms interpreted as indicating a question in his multimedia contents is higher than a certain threshold.

Furthermore, a creator may be considered as playing the role of a "troll" (i.e. a person who aims to take part to a maximum number of discussions in order to disturb the discussion by offending the participants) according to a combination of:
- a mean number of replies to his multimedia contents being higher than a certain threshold (for example a mean percentage of replies in the community),
- a number of terms extracted from his multimedia contents and identified as slang words or insults by a semantic analysis tool, said number being higher than a certain threshold.

A creator may be determined as playing a role of a "spammer" (who aims to include a special URL in many forums) if he broadcasts a high number of multimedia contents, most multimedia contents including the same URL, but only receives a few replies.

A creator may be determined as playing a role of an "expert" according to:
- the expertise level of his profile being higher that a certain threshold and/or
- the average time for him for responding to a received multimedia content, being below a certain threshold and/or
- the size of his multimedia contents being higher than a certain threshold and/or
- the number of replies to his multimedia content being higher than a certain threshold.

In some embodiments, the role of a member, notably a creator, and/or some specific characteristics of his corresponding node in the social graph, for instance the count of in- or out- links connected to his node being over a threshold, or the ratio between the out- an in- links being over a threshold, may notably be added to his profile.

According to the illustrated embodiment, the method M further comprises a step of semantically analyzing 130 at least a multimedia content.

Such a semantic analysis may be based on Natural Language Processing Techniques, and leads to a decision of identification of at least a semantically significant item and, in case of a positive decision, to the association of at least a semantic content descriptor, deduced from this semantically significant item with at least a part of the multimedia content. For example, a semantically significant item itself may be associated, as a semantic content descriptor, to a multimedia content. Multimedia contents related to movies may be complex and may contain several parts that may be distinguished in a semantic point of view. As a consequence, some semantic content descriptors may only be related to a part of the multimedia content.

As for a feature extracted from a creator's multimedia content (step 100), a semantic content descriptor may be assigned a value either by a direct mapping with at least an extracted semantic item of information or either by using predefined rules taking account of this extracted semantic item of information.

Relations between multimedia contents such as reply-to structures may also help in determining sentiments or extracting semantic item of information from the posts.

Conversely, relationships between creators, as represented by the social graph, may also help in analyzing the sentiment of posts, e.g. understanding irony or sarcasm since two interacting creators appear to be in agreement but are almost exclusively of opposing opinions in all other circumstances.

According to the illustrated embodiment, the description contains some document-related features (as a scene title of a sequence of the description, or a list of characters, or a particular aspect of the document making (named entity, actor, director, light, action, etc..) and the semantically analyzing step 130 notably takes into account at least one of those document-related features, in order to discover in the multimedia content some item being only meaningful in the semantic context of the document.

Furthermore, the method M also comprises an obtaining step 140 of an enriched description.

In a preferred embodiment, the description is a time-stamped description, and said obtaining step 140 notably comprises a sub-step of timely aligning 142 one or several parts of a multimedia content previously associated to one or several semantic content descriptors with one time-stamp of the time-stamped description. Such a temporal alignment may be based on a criterion of similarity between a semantic content descriptor related to a part of a multimedia content and a portion of the time-stamped description.

For example, the alignment may be based on a semantic content descriptor being an explicit temporal reference to a moment of the audiovisual document. In such a case, the multimedia content may be aligned with the corresponding time-stamps of the document description.

When the description contains textual elements, the alignment may be based on a mapping of semantic content descriptors with specific feature comprised in the description of the document, such as a specific scene, event or action, or a particular aspect in a specific scene.

In a preferred embodiment, the method M also further comprises a sub-step 144 of associating the time-stamp identified during the alignment step 142 with one or several timely aligned multimedia contents. This associating sub-step 144 may result in an enriching multimedia content (or a part of a multimedia content) being associated either with a simple time-stamp, or either with a time interval.

In case of an association with a simple time-stamp, during following step 160, the enriching multimedia content may be for example rendered during a default time interval, or until a manual action of the user is performed. In case of on association with a time interval, during following step 160, the enriching multimedia content may be rendered during this time interval, unless a fixed time is configured or a manual action of the user is performed.

The implementation of the associating step 144 may vary upon embodiments. In some embodiments, a logical link to each timely aligned multimedia content or part of a multimedia content, may be added to the description for each identified time-stamp. In other embodiments, maybe complementary, when a part of a multimedia content is associated to several time-stamps, a duplicated multimedia content may be created for each associated time-stamp.

This may be the case for instance when the multimedia content, or the part of a multimedia content, is a single picture or a short textual comment. When the multimedia content is semantically divided in several parts, a duplicated multimedia content may be truncated in order to just contain the part that is associated to the time-stamp.

In some embodiments, during the obtaining step 140, at least one of the semantic content descriptors of an aligned multimedia content may also be added to the document features of the description, in relation to a time-stamp identified in the alignment step 142. Such an embodiment may result, when the method is performed iteratively, in obtaining a richer description, some semantic content descriptor being identified during a new iteration thanks to semantic content descriptors having been added to the time-stamped description, as document features, during a previous iteration.

The method M also comprises a selecting step 150 of the enriching multimedia content that will be rendered to a particular user.

Depending upon embodiments, this selecting step may be performed just after the obtaining step 140 or at a later time. For example, an enriched description may be obtained from time to time (on a periodic basis, or based on a volume of new created multimedia contents inside the community) and may be memorized on an audiovisual documents server.

Then, when a user performs a manual action, asking for the rendering of the document for instance, the selected step 150 is performed for this user.

According to a preferred embodiment, the selection may take account of a set of predefined rules.

At least some of the predefined rules of the selecting step 150 may have been defined by default or configured for/by the user in a preliminary step.

Such a predefined rule may be based at least partially on some of the characteristics of the profile and/or role of a user and also of a creator of an enriching multimedia content.

In particular, when the same enriched description is used for several users, the result of the selecting steps for both users may differ depending on each user's profile and/or role.

For example, every enriching multimedia content published and/or being replied to by an "expert" or by a "neighbor" of a user may always be selected for the user.

At the opposite, a "spammer" multimedia content may never be selected or a "novice" multimedia content may never be selected for an "expert" user.

Notably, some rules may also take account of a criterion of similarity between at least a characteristic contained in a user's profile, notably a semantic feature added during the enriching step 100 to the user's profile, and at least a semantic content descriptor associated to a part of an enriching multimedia content. For example, every enriching multimedia content having a semantic content descriptor related to a user's favorite actor may be selected, or every enriching multimedia content with an associated semantic content descriptor related to a user's favorite actor might be selected.

It should be noted that a multimedia content may be associated with several semantic content descriptors, and that the semantic content descriptor of a multimedia content evaluated during the obtaining step 140 and the semantic content descriptor evaluated during the selecting step 150 may be distinct.

According to some embodiments, the method M further comprises a simultaneous rendering step 160, performed during a rendering of the audiovisual document according to the description, of the selected enriching multimedia contents and the audiovisual document, according to the enriched description.

This simultaneous rendering step 160 may also comprise the simultaneous rendering of some of the semantic content descriptors of the selected enriching multimedia contents.

The way a multimedia content that comprises several parts is to be rendered to a user depends upon the embodiments: in some embodiments, the entire multimedia content will be rendered, in some other embodiments only the selected part will be rendered. In a variant, only the selected part will be rendered but the user may manually activate the rendering of the entire multimedia content. Such a manual activation may be performed by the activation of a logical link giving access to the entire multimedia content or to another part of the multimedia content (this logical link may be selectable by a label, that may be activated by an end-user for instance, of a shown semantic content descriptor of the multimedia content for instance).

It should be understood that, in variant, the steps of the method M might obviously be implemented in a different order as the one previously described or that several steps may be performed simultaneously or at the contrary with a different periodic basis.

According to the invention, the method M may be preferably performed more or less automatically, with few (or even no) action from the user requesting the considered audiovisual document (except of course for the document request itself).

Besides, the steps of method M for enriching at least a time-stamped description related to an audiovisual document previously described might be implemented by a device 200 as shown on Figure 2, which might be, for instance, connected to a communication network, such as an Internet type network.

In particular, by considering a given description, related to an audiovisual document intended to be viewed by a user, to be enriched with one or several multimedia contents created by one or several creators, the creators and the user being assigned a profile consisting of a set of characteristics, the device 200 might comprise:
- a calculating module 210 configured to calculate at least a social score for each creator and/or user;
- a determining module 220 configured to determine a role for at least a creator and/or user, a role being selected, among a plurality of predefined roles, according to at least one first pre-determined rule taking into account the profile and/or social score of said creator and/or user;
- a semantically analyzing module 230 configured to semantically analyze at least one of said multimedia contents for identifying at least a content descriptor to be associated to said at least one multimedia content;
- an obtaining module 240 configured to obtain an enriched description, said description being enriched with at least one of said multimedia contents, called an enriching multimedia content, according to at least a content descriptor of said multimedia content;
- a selecting module 250 configured to select, for at least one of said users, at least a part of at least an enriching multimedia content, according to at least one second pre-determined rule taking into account said user's profile and/or role, at least one of said semantic content descriptor of said enriching multimedia content and/or the profile and/or the role of at least one creator of said enriching multimedia content.

These modules might be driven by a microprocessor of a processing unit (not shown on Figure 2).

According to the invention, the step of method M for enriching multimedia content previously described might be implemented by a system, comprising at least a server. The system may also comprise at least a terminal that might be, for instance, connected over a communication network, such as an Internet type network to the server.

In some embodiments, all steps of the method M might be implemented by the server, a terminal just acting as a display unit for the rendering of the audiovisual document and/or the parts of timely-aligned multimedia contents.

In other embodiments, a terminal, for instance the terminal 300 shown on Figure 3, may personalize an enriched description, received from the server, of an audiovisual document intended to be viewed by a user of said terminal, said user being assigned a profile consisting of a set of characteristics. The terminal 300 might comprise:
- a reception module 310 configured to receive an enriched description, said description being enriched with at least a multimedia content associated with at least a content descriptor;
- a selecting module 320 configured to select at least a part of said multimedia content to be rendered to said user of said terminal, according to at least one pre-determined rule taking into account said user's profile and taking into account at least one of said content descriptors.

As will be appreciated by one skilled in the art, aspects of the present principles can be embodied as a method, a device, a computer readable medium or a computer program product.

Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

References disclosed in the description, the claims and the drawings might be provided independently or in any appropriate combination. Features may, where appropriate, be implemented in hardware, software, or a combination of the two.

Reference numerals appearing in the claims are by way of illustration only and shall have no limiting effect on the scope of the claims.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

In the claims hereof, any element expressed as a means for performing a specified function (e.g. the calculating module 210, the determining module 220, the analyzing module 230, the obtaining module 240, the selecting module 250 or 320, the reception module 310) is intended to encompass any way of performing that function including, for instance, a) a combination of circuit elements (for instance one or more processors) that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

## Claims

1. A method for enriching at least a description related to an audiovisual document intended to be viewed by at least a user, with at least a multimedia content created by at least a creator, each creator and each user being assigned a profile consisting of a set of characteristics, said method comprising:
- calculating (110) at least a social score for each creator and/or user;
- determining (120) a role for at least a creator and/or user, a role being selected, among a plurality of predefined roles, according to at least one first pre-determined rule taking into account the profile and/or social score of said creator and/or user;
- semantically analyzing (130) at least one of said multimedia contents for identifying at least a semantic content descriptor to be associated to said at least one multimedia content;
- obtaining (140) an enriched description, said description being enriched with at least one of said multimedia contents, called an enriching multimedia content, according to at least a semantic content descriptor of said multimedia content;
- for at least one of said users, selecting (150) at least a part of at least one enriching multimedia content, to be rendered to said user, according to at least one second pre-determined rule taking into account said user's profile and/or role, at least one of said semantic content descriptors of said enriching multimedia content and/or the profile and/or the role of at least one creator of said enriching multimedia content.

2. The method of claim 1 wherein each creator and/or user belongs to an online community of members and wherein calculating at least a social score for said creator and/or user comprises:
• defining (112) a social graph representing the previous interactions and/or relationships between said members inside said online community, each node of said graph relating to a member;
• assigning (114) to each node of said graph a social score, calculated according to its position in said social graph and/or to its connections with other nodes.

3. The method of claim 2 wherein a connection between two nodes is based on the involvement of the members represented by said nodes in at least a multimedia content created by a member of said community.

4. The method of at least one of claims 1 to 3 wherein a social score of a node is based on at least on of:
- a position of said node in the graph, central nodes of said graph being assigned a higher social score than peripheral nodes;
- a number of connections established with said node;
- said node closeness centrality;
- said node betweeness centrality;
- a level of respect associated with a member related to said node.

5. The method of at least one of claims 1 to 4 wherein semantically analyzing comprises:
- delivering a decision of identification of at least a semantically significant item, and
- when said decision is positive, associating at least a semantic content descriptor, deduced from said semantically significant item, to at least a part of said at least one multimedia content.

6. The method of at least one of claims 1 to 5 wherein said description is a time-stamped description, comprising at least a time-stamp representative of a temporal position in said audiovisual document, and wherein obtaining an enriched description comprises:
- timely aligning (142) at least a part of a least one of said multimedia contents with at least one time-stamp of said time-stamped description, said alignment being based on a criterion of similarity between at least a content descriptor previously associated to said multimedia content and a portion of said time-stamped description,
- associating (144) said time-stamp with at least a part of a timely-aligned multimedia content.

7. The method of claim 6 wherein semantically analyzing at least one of said multimedia contents is performed before timely aligning and takes into account at least a document related feature contained in said time-stamped description.

8. The method of at least one of claims 6 and 7 wherein said method further comprises, during a rendering of said audiovisual document according to said enriched description, a simultaneous rendering of said selected at least one part of said enriching multimedia content at said at least one time-stamp.

9. The method of at least one of claims 1 to 8 wherein said method further comprises enriching at least a creator's profile, with at least a predefined feature deduced from his own multimedia contents.

10. The method of claim 9 wherein at least one of enriching, calculating, determining, semantically analyzing, obtaining, and selecting is performed periodically.

11. The method of at least one of claims 9 and 10 wherein at least two of enriching, calculating, determining, semantically analyzing, obtaining, and selecting are performed simultaneously.

12. The method of at least one of claims 1 to 9 wherein selecting is triggered by a manual action of the user.

13. A device for enriching at least a description related to an audiovisual document intended to be viewed by at least a user, with at least a multimedia content created by at least a creator, each creator and each user being assigned a profile consisting of a set of characteristics, said device being **characterized in that** it comprises the following modules:
- a calculating module (210) configured to calculate at least a social score for each creator and/or user;
- a determining module (220) configured to determine a role for at least a creator and/or user, a role being selected, among a plurality of predefined roles, according to at least one first pre-determined rule taking into account the profile and/or social score of said creator and/or user;
- a semantically analyzing module (230) configured to semantically analyze at least one of said multimedia contents for identifying at least a semantic content descriptor to be associated to said at least one multimedia content;
- an obtaining module (240) configured to obtain an enriched description, said description being enriched with at least one of said multimedia contents, called an enriching multimedia content, according to at least a semantic content descriptor of said multimedia content;
- a selecting module (250) configured to select, for at least one of said users, at least a part of at least an enriching multimedia content, according to at least one second pre-determined rule taking into account said user's profile and/or role, at least one of said semantic content descriptor of said enriching multimedia content and/or the profile and/or the role of at least one creator of said enriching multimedia content.

14. A terminal for personalizing a description of an audiovisual document intended to be viewed by a user of said terminal, said user being assigned a profile consisting of a set of characteristics, said terminal being **characterized in that** it comprises the following modules:
- a reception module (310) configured to receive an enriched description, said description being enriched with at least a multimedia content associated with at least a semantic content descriptor;
- a selecting module (320) configured to select at least a part of said multimedia content to be rendered to said user of said terminal, according to at least one pre-determined rule taking into account said user's profile and taking into account at least one of said semantic content descriptors.

15. Computer program product downloadable from a communication network and/or recorded on a medium readable by computer and/or executable by a processor, comprising program code instructions for implementing the steps of a method according to at least one of claims 1 to 12.
